(19) Europäisches Patentamt
European Patent Office
Office européen des brevets

(11) **EP 2 748 589 B1**

(12) **EUROPÄISCHE PATENTSCHRIFT**

(45) Veröffentlichungstag und Bekanntmachung des Hinweises auf die Patenterteilung:
**09.12.2020   Patentblatt 2020/50**

(21) Anmeldenummer: **12761921.1**

(22) Anmeldetag: **24.08.2012**

(51) Int Cl.:
**G01N 21/27** *(2006.01)*        **G01N 21/3504** *(2014.01)*

(86) Internationale Anmeldenummer:
**PCT/EP2012/066531**

(87) Internationale Veröffentlichungsnummer:
**WO 2013/030121 (07.03.2013 Gazette 2013/10)**

(54) **Verfahren zum Ermitteln der Reinheit eines Kältemittels**

Method for determining the purity of a refrigerant

Méthode pour déterminer la pureté d'un réfrigérant

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.08.2011   DE 102011111836**

(43) Veröffentlichungstag der Anmeldung:
**02.07.2014   Patentblatt 2014/27**

(73) Patentinhaber: **Inficon GmbH
50968 Köln (DE)**

(72) Erfinder:
• **KÜSTER, Gerhard
51109 Köln (DE)**
• **GROSSE BLEY, Werner
53125 Bonn (DE)**

(74) Vertreter: **dompatent von Kreisler Selting Werner - Partnerschaft von Patent- und Rechtsanwälten mbB
Deichmannhaus am Dom
Bahnhofsvorplatz 1
50667 Köln (DE)**

(56) Entgegenhaltungen:
EP-A2- 1 398 618        WO-A1-2011/076459
US-A- 5 610 400         US-B1- 6 791 088
US-B1- 7 535 007        US-B2- 6 995 360

• **P Gänswein ET AL:
"Absorptionsuntersuchungen an Kohlenwasserstoffen im nahen Ultraroten", Zeitschrift für Physik, vol. 99, 1 March 1936 (1936-03-01), pages 189-203, XP055654870,**

**Beschreibung**

Die Erfindung betrifft eine Vorrichtung und ein Verfahren zur Identifikation von Kältemitteln.

Aufgrund gesetzlicher Vorgaben dürfen verschiedene Kältemittel nicht verwendet werden. In der Automobilindustrie wird beispielsweise zukünftig das Kältemittel HF01234yf anstelle des bisherigen Kältemittels R134a verwendet. Bei einer späteren Reparatur von Klimaanlagen müssen Verunreinigungen beispielsweise des Kältemittels HFO123yf in Kraftfahrzeugklimaanlagen durch andere Kältemittel, wie z. B. R134a, detektiert werden können.

Zur Detektion von Kältemitteln wird deren unterschiedliche Infrarotabsorption genutzt. Hierbei wird eine Gaszelle mit dem zu testenden Kältemittel (Testkältemittel) gefüllt und mit Infrarotstrahlung durchstrahlt. Ein Sensor auf der gegenüberliegenden Seite empfängt dann die Strahlung, wobei in Abhängigkeit von den in der Gaszelle vorhandenen Kältemitteln verschiedene Strahlungsanteile stärker absorbiert werden als andere. Das gemessene Absorptionsspektrum wird von dem Infrarotsensor in eine messbare elektrische Spannung umgewandelt.

Bei den bekannten Messungen mithilfe der Infrarotabsorption führen Änderungen der Temperatur, des atmosphärischen Drucks, Alterung oder Verschmutzung der Gaszelle zu Messungenauigkeiten. Eine Langzeitstabilität der Messergebnisse ist nur unter erheblichem Aufwand erzielbar.

EP 1 398 618 A2 beschreibt ein Verfahren zum Ermitteln der Zusammensetzung eines zu testenden Testkältemittels unter Verwendung einer Vorrichtung mit einer Gaszelle, die einen Testgaseinlass und einen Testgasauslass aufweist, einer die Gaszelle durchstrahlenden Infrarotquelle, Kartuschen, die verschiedene Kältemittel jeweils in reiner Form als Referenzgas enthalten, und mindestens einem die durch die Gaszelle hindurchtretende Infrarotstrahlung erfassenden Sensor. Dabei sind zwischen der Infrarotquelle und dem Sensor schmalbandige IR-Filter vorgesehen und die Gaszelle kann derart mit den Kartuschen verbunden werden, dass die Gaszelle mit dem Referenzgas aus jeweils einer der Kartuschen befüllbar ist.

Der Erfindung liegt die Aufgabe zugrunde, ein Verfahren zum Ermitteln der Reinheit eines zu testenden Kältemittels zu schaffen.

Das erfindungsgemäße Verfahren wird definiert durch die Merkmale von Patentanspruch 1.

Die vom erfindungsgemäßen Verfahren verwendete Vorrichtung weist mindestens ein Breitbandfilter in dem Strahlengang von der Infrarotquelle durch die Gaszelle in den Sensor auf. Der Durchlassbereich des Breitbandfilters weist keine Absorptionswellenlänge eines Kohlenwasserstoffs auf und hat entsprechend einen Durchlassbereich von 8 $\mu$m - 14 $\mu$m. Die Vorrichtung weist zudem eine Kartusche mit dem zu detektierenden Kältemittel als Referenzgas auf. Die Kartusche ist mit dem Gaseinlass der Gaszelle verbunden.

Hierbei wird nach dem erfindungsgemäßen Verfahren zunächst eine Messung der Absorption innerhalb des Durchlassbereichs des Breitbandfilters bei mit Referenzkältemittel gefüllter Gaszelle durchgeführt. Anschließend wird eine Messung des Absorptionsspektrums in dem Durchlassbereich des Breitbandfilters mit dem zu testenden Kältemittel durchgeführt. Schließlich wird der Quotient aus den gemessenen Absorptionswerten des Referenzkältemittels und den gemessenen Absorptionswerten des Testkältemittels gebildet. Der Quotient lässt eine Aussage über die relative Reinheit des zu testenden Kältemittels im Vergleich zu dem reinen Referenzkältemittel zu.

Vorzugsweise werden zudem Messungen auch mit mindestens einem Schmalbandfilter durchgeführt. Hierbei sollte ein Schmalbandfilter vorgesehen sein, dessen Durchlassbereich nur die Absorptionswellenlängen des reinen, zu detektierenden Kältemittels, d.h. des Referenzkältemittels aufweist. Ein weiteres Schmalbandfilter sollte auf die Absorptionswellenlänge eines anderen Kältemittels, welches das zu detektierende Kältemittel verunreinigt, abgestimmt sein. Das zu detektierende Kältemittel ist typischerweise HFO1234yf, dessen Absorptionswellenlänge unter anderem bei ungefähr 7,4 $\mu$m liegt. Der Durchlassbereich des ersten Schmalbandfilters könnte demnach im Bereich zwischen 7,2 $\mu$m und 7,6 $\mu$m liegen. Ein typisches anderes Kältemittel, welches HFO1234yf verunreinigen würde, ist das Kältemittel R134a, dessen Absorptionswellenlänge unter anderem bei ungefähr 7,69 $\mu$m liegt. Zur Detektion von ausschließlich R134a sollte der Durchlassbereich des zweiten Schmalbandfilters im Bereich zwischen 7,5 $\mu$m und 7,9 $\mu$m liegen. Zur Detektion von HFO123yf sollte der Durchlassbereich des Breitbandfilters als untere Grenzfrequenz vorzugsweise 8 $\mu$m und als obere Grenzfrequenz vorzugsweise 14 $\mu$m aufweisen. Hierbei werden die Absorptionswellenlängen von Kohlenwasserstoffen von dem Filter nicht durchgelassen, weil diese unterhalb von 8 $\mu$m liegen.

Zur Detektion des Kältemittels kann dann mindestens eine Wellenlänge außerhalb des Durchlassbereichs des Breitbandfilters gemessen werden. Dies ist die Wellenlänge der Absorption des anderen, unerwünschten Kältemittels (beispielsweise R134a mit 7,69 $\mu$m und/oder Kohlenwasserstoffe mit 3,38 $\mu$m). Vorzugsweise wird hierbei neben dem Breitbandfilter das Schmalbandfilter zur Ermittlung von Kohlenwasserstoffen mit 3,38 $\mu$m, das Schmalbandfilter zur Ermittlung von R134a mit 7,69 $\mu$m und ein drittes Schmalbandfilter zur Ermittlung von ausschließlich HFO123yf mit 7,3 $\mu$m verwendet. Die erhaltenen Messwerte bei Verwendung jedes dieser vier Filter werden mit zuvor während eines Kalibriervorgangs ermittelten Messwerten verschiedener Gaszusammensetzungen verglichen. Hierbei wird diejenige der bei der Kalibrierung eingesetzten Gaszusammensetzungen als detektiert angenommen, welche den gemessenen Werten am nächsten kommt.

Bei dem Verfahren zur Kältemittelidentifikation wird vorzugsweise in dem Fall, dass die Absorption mindestens einer Wellenlänge innerhalb des Durchlassbereichs des Breitbandfilters einem bekannten, verunreinigenden Kältemittel entspricht, die Absorption mindestens einer Wellenlänge außerhalb des Filterdurchlassbereichs, welche ausschließlich dem verunreinigenden Kältemittel entspricht, gemessen. Anschließend wird ein lineares Gleichungssystem aufgestellt, in welchem zu jedem Filter die Gesamtabsorption in dessen Durchlassbereich einer Linearkombination der jeweiligen Einzellinienabsorptionen gleichgesetzt wird. Das heißt mit anderen Worten, dass die Einzellinienabsorptionen, d. h. die einem jeweiligen Kältemittel zuzuordnenden Absorptionen, jeweils mit einem Koeffizienten versehen und anschließend addiert werden, wobei die Summe der Einzellinienabsorptionen der Gesamtabsorption in dem betreffenden Filterwellenlängendurchlassbereich gleichgesetzt wird. Durch Auflösen des linearen Gleichungssystems kann anschließend jede unbekannte Konzentration eines Kältemittels berechnet werden, in dem das Gleichungssystem nach dem betreffenden, gesuchten Koeffizienten aufgelöst wird.

Schließlich ist alternativ auch denkbar, dass jedes Kältemittel mithilfe eines entsprechenden Schmalbandfilters mit geeigneter, auf das jeweilige Kältemittel abgestimmter Durchlasswellenlänge gemessen wird.

Im Folgenden werden anhand der Figuren Ausführungsbeispiele der Erfindung näher erläutert. Es zeigen:

Fig. 1 ein Ausführungsbeispiel der erfindungsgemäßen Vorrichtung,

Fig. 2 die Durchlass-Wellenlängenbereiche der eingesetzten Filter,

Fig. 3 die Absorptionsspektren eines Gemisches aus drei Kältemitteln und

Fig. 4 ein Ablaufdiagramm zu dem erfindungsgemäßen Verfahren.

Die vom erfindungsgemäßen Verfahren verwendete Vorrichtung 10 weist eine Gaszelle 12 mit einem Gaseinlass 14 und einem Gasauslass 16 auf. Die Gaszelle ist auf zwei einander gegenüber liegenden Seiten mit CaF2-Fenstern 18 versehen, die Infrarotstrahlung von der Infrarotquelle 20 zu dem Sensor 22 durch die Gaszelle 12 hindurchlassen.

Der Gaseinlass 14 der Gaszelle 12 ist über ein steuerbares Ventil V1 mit einem Lufteinlass verbunden. Der Gaseinlass 14 ist über ein Rückschlagventil V4 mit einem Testgaseinlass für das zu detektierende Kältemittel verbunden. Über ein steuerbares Ventil V2 ist der Gaseinlass 14 über einen Druckminderer 24 mit einer Kartusche 26 verbunden, welche das zu detektierende Kältemittel HFO1234yf in Reinform als Referenzgas enthält. Die Referenzgaskartusche 26 ist Bestandteil der erfindungsgemäßen Vorrichtung.

In den Strahlengang zwischen der Infrarotquelle 20 und dem Sensor 22 werden je nach Messung verschiedene optische Filter 28, 30 eingesetzt.

Der Gasauslass 16 der Gaszelle 12 ist über ein steuerbares Ventil V3 und über eine Membranpumpe 32 mit einem Gasauslass zur Atmosphäre hin verbunden.

Bei jeder Messung wird das zu testende Kältemittel mit dem Referenzkältemittel in der Kartusche 26 verglichen. Da alle Umgebungsbedingungen sowohl für das zu testende Kältemittel als auch für das Referenzkältemittel identisch sind, fallen diese als Störgrößen nicht mehr ins Gewicht.

Der verwendete Sensor 22 enthält vier einzelne Sensorelemente, denen jeweils ein eigenes Infrarotfilter 30 zur Detektion eines spezifischen Wellenlängenbereichs vorgeschaltet ist. Die vier Sensorelemente liefern folglich unterschiedliche Ausgangsspannungen für das in der Gaszelle 12 vorhandene Gasgemisch. Die vier gemessenen Spannungen werden mit zuvor während eines Kalibriervorgangs ermittelten Messwerten verschiedener Gaszusammensetzungen verglichen, wobei diejenige der kalibrieten Gaszusammensetzungen als detektiert gilt, welche den gemessenen Spannungen am nächsten kommt.

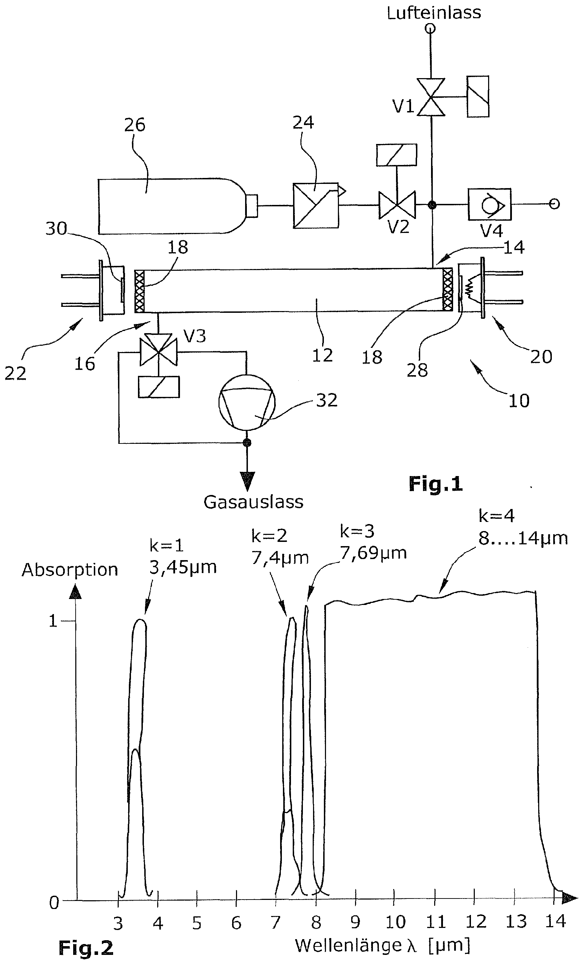

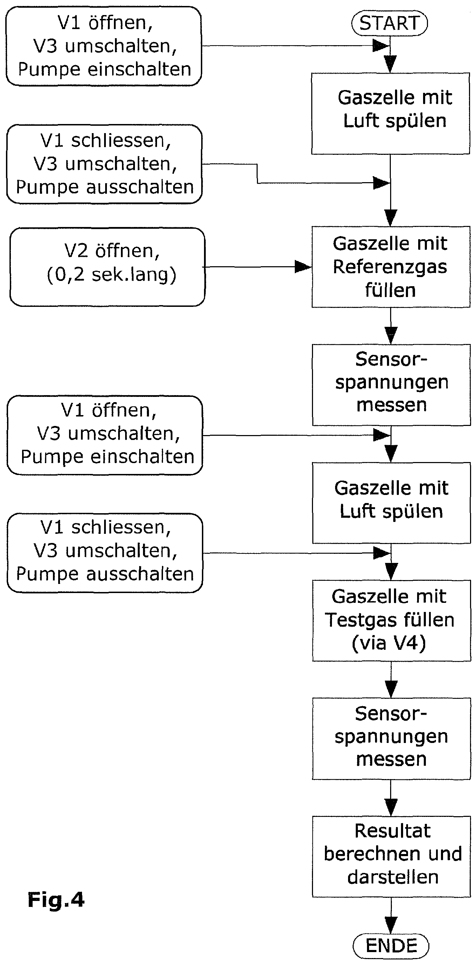

Fig. 4 zeigt als Ablaufdiagramm den Ablauf des erfindungsgemäßen Verfahrens mithilfe der Vorrichtung nach Fig. 1. Nach dem Start wird zunächst das Ventil V1 geöffnet, das Ventil V3 auf die Membranpumpe 32 umgeschaltet und die Membranpumpe 32 aktiviert. Dadurch wird die Gaszelle 12 mit Luft aus dem Lufteinlass gespült.

Anschließend wird Ventil V1 zum Lufteinlass hin geschlossen und das Ventil V3 von der Membranpumpe 32 fortgeschaltet und die Pumpe ausgeschaltet. Um die Gaszelle 12 mit Referenzgas aus der Kartusche 26 zu füllen, wird das Ventil V2 für eine Dauer von 0,2 Sekunden geöffnet. Anschließend werden die Spannungen der Sensorelemente des Sensors 30 gemessen.

Anschließend wird das Ventil V1 geöffnet, das Ventil V3 auf die Pumpe umgeschaltet und die Pumpe 32 eingeschaltet, um die Gaszelle mit Luft zu spülen.

Anschließend wird das Ventil V1 wieder geschlossen, das Ventil V3 von der Pumpe fortgeschaltet, die Pumpe 32 abgeschaltet und die Gaszelle mit Testgas über das Rückschlagventil V4 gefüllt. Nach Füllen der Gaszelle 12 mit dem Testgas werden die Sensorspannungen des Sensors 22 gemessen und der Anteil des Gases HFO1234yf an dem Testgas wird wie im Folgenden beschrieben bestimmt:

Gemäß einer ersten Variante werden Sensorelemente S1, S2, S3 und S4 verwendet. Dem Sensorelement S1 wird ein Breitbandfilter mit einem Durchlassbereich von 8-14 $\mu$m zugeordnet. Dem Sensorelement S2 wird ein Schmalbandfilter mit einer Durchlassfrequenz von 3,38 $\mu$m für Kohlenwasserstoffe zugeordnet. Dem Sensorelement S3 wird ein Schmalbandfilter mit einem Durchlassbereich von 7,69 $\mu$m für das Kältemittel R134a zugeordnet. Dem Sensorelement S4 wird ein Schmalbandfilter mit einer Durchlassfrequenz von 7,3 $\mu$m für das zu detektierende Kältemittel HFO123yf zugeordnet.

Am Sensorelement S1 wird bei mit Testgas gefluteter Gaszelle 12 die Spannung $V_{Meas,S1}$ und bei mit Referenzgas aus der Kartusche 26 gefluteter Gaszelle die Referenzspannung $V_{Ref,S1}$ gemessen.

Das Ergebnis einer Messung ist der Quotient von $V_{Meas,S(i)}$ und $V_{Ref,S(i)}$:

$$a_{Meas} = \frac{V_{Meas,S1}}{V_{Ref,S1}}, \quad b_{Meas} = \frac{V_{Meas,S2}}{V_{Ref,S2}}, \quad c_{Meas} = \frac{V_{Meas,S3}}{V_{Ref,S3}}, \quad d_{Meas} = \frac{V_{Meas,S4}}{V_{Ref,S4}}$$

$a_{Cal}$, $b_{Cal}$, $C_{Cal}$, $d_{Cal}$ → Messwerte von S1, S2, S3, S4, ausgelesen aus einer Datei mit Kalibrierwerten für spezifische Gasmischungen

Die in der Datei enthaltenen Kalibrierwerte sind einmalig während einer Kalibrierprozedur gemessene Verhältniswerte $V_{Meas}/V_{Ref}$ der vier Sensorelemente S1, S2, S3 und S4.

Beispielhafter Auszug aus einer Datei mit Kalibrierwerten:

| 1,00000 | 1,00000 | 1,00000 | 1,00000 |
| 1,00231 | 1,00210 | 0,97337 | 1,00497 |
| 0,98800 | 1,00000 | 0,95000 | 1,00000 |
| 0,97600 | 0,99800 | 0,90800 | 1,00400 |

Die erste Reihe (1,00000 1,00000 1,00000 1,00000) repräsentiert die Spannungs-Verhältniswerte für 100% reines HFO 1234yf. Da die gemessenen Signalspannungen für das zu testende Gas und das Referenzgas (welches aus 100% reinem HFO 1234yf besteht) gleich groß sind, ergibt der Quotient aus beiden jeweils "1.000".

Die zweite Reihe zeigt die entsprechenden Werte für eine Mischung aus 99,5% HFO 1234yf und 0,5% R134a, die dritte die Werte für 99% HFO 1234yf und 1% R134a, usw.

Um die Reinheit des HFO 1234yf-Kältemittels bzw. die Zusammensetzung der zu testenden Gasmischungen zu bestimmen, wird die Abweichung zwischen den gemessenen Absorptionen und den für bestimmte Gemische zu erwartenden Absorptionen durch eine Metrik nach der "Methode der kleinsten Quadrate" bestimmt. Auf diese Weise kann ermittelt werden, welche Reihe der Kalibrierdaten aus der Datei verglichen mit den gemessenen Werten für das zu testende Gas die kleinste Abweichung hat.

$$S = \left(\frac{a_{Cal}[i]}{b_{Cal}[i]} - \frac{a_{Meas}}{b_{Meas}}\right)^2 + \left(\frac{a_{Cal}[i]}{c_{Cal}[i]} - \frac{a_{Meas}}{c_{Meas}}\right)^2 + \left(\frac{a_{Cal}[i]}{d_{Cal}[i]} - \frac{a_{Meas}}{d_{Meas}}\right)^2 + ..$$

$$.. + (a_{Cal}[i] - a_{Meas})^2 + (b_{Cal}[i] - b_{Meas})^2 + (c_{Cal}[i] - c_{Meas})^2 + (d_{Cal}[i] - d_{Meas})^2$$

Diese Berechnung wird für alle Reihen der Kalibrierdatei durchgeführt, [i] in der o.a. Formel ist die Nummer der Reihe. Das Resultat ist ein Array mit so vielen Werten, wie es Reihen in der Kalibrierdatei gibt. Der kleinste Wert in diesem Array ist der gesuchte Wert, bzw. die Gasmischung, für den er steht.

Bei einem alternativen Ausführungsbeispiel des erfindungsgemäßen Messverfahrens hat der Sensor 22 drei Infrarotfilter mit unterschiedlichen Bandbreiten. Ein erstes Filter ist auf die Wellenlänge 7,4 $\mu$m für HFO1234yf ausgerichtet. Ein weiteres Filter ist auf die Wellenlänge 7,69 $\mu$m für R134a ausgerichtet. Ein viertes Filter ist als Breitbandfilter für den Wellenlängenbereich von 8 bis 14 $\mu$m für alle vorkommenden Kältemittel ausgelegt. Ein weiteres Schmalbandfilter ist auf die Wellenlänge von 3,45 $\mu$m für Kohlenwasserstoffe ausgelegt. Die Durchlassbereiche dieser Filter sind in Fig. 2 dargestellt.

Messprinzip:

Zur Bestimmung der Konzentrationen eines Kältemittelgemisches aus den Gaskomponenten j wird die Absorption auf den Wellenlängen k gemessen und dann das lineare Gleichungssystem

$$A_k = \sum_{j=1}^{AK} c_j \cdot a_{jk} \qquad (1)$$

gelöst, wobei folgende Bezeichnungen gelten:

$A_k$      Gesamtabsorption der Gasmischung im Wellenlängenbereich k

$c_j$      Konzentration der Gaskomponente j

$a_{jk}$      Absorption der Komponente j im Wellenlängenbereich k

AK      Anzahl Gaskomponenten

Besonderheit der Lösung

Einer der Wellenlängenbereiche ist so breit gewählt, dass er alle im Prinzip unbekannten Kältemittel erfasst (8...14 μm) und damit eine Aussage über die Reinheit ermöglicht, ohne alle Spektrallinien einzeln zu analysieren.

Es ist deshalb kein Infrarotphotospektrometer erforderlich und es ist auch nicht erforderlich, vollständig alle enthaltenen Komponenten zu kennen.

Messablauf im Detail:

Kalibrierung:

0. Vorbereitend wird jeder Sensor einer Werkskalibrierung unterzogen, wobei die Faktoren $a_{jk}$ individuell bestimmt werden (zum Ausgleich von Filtertoleranzen). Dazu werden die Substanzen j jeweils eingelassen (d.h. $c_j = 1$) und die Absorptionen $a_{jk}$ aus Gleichung (1) bestimmt.

Messung:

1. Die Messung startet mit einer Nullpunktbestimmung, indem Luft in die Küvette eingelassen wird. Dabei werden alle "Null-Absorptionen" $A_{k,0}$ bestimmt.

2. Die eigentliche Messung erfolgt nach Einlass des unbekannten Kältemittelgemisches bei definiertem Druck (Atmosphärendruckgenauigkeit oder mit Drucksensor gemessen): alle Absorptionen $A_k$ in den Wellenlängenbereichen k werden gemessen.

Auswertung:

3. Mit der bekannten "Nullabsorption" $A_{k,0}$ werden nun die Nettoabsorptionen $A_k = A_k - A_{k,0}$ berechnet.

4. Mit den Nettoabsorptionen und den aus der Kalibrierung bekannten $a_{jk}$ kann nun das Gleichungssystem (1) aufgestellt werden. Die Lösung erfolgt mit bekannten Methoden, z.B. durch Matrixinversion.

5. Wenn man mehr als eine Messung mit derselben Mischung durchführt, besteht die Möglichkeit, in bekannter Weise eine Ausgleichsrechnung mit dem dann überbestimmten Gleichungssystem durchzuführen (z.B. multiple lineare Regression) und damit auch die Standardabweichung der Konzentrationen zu bestimmen.

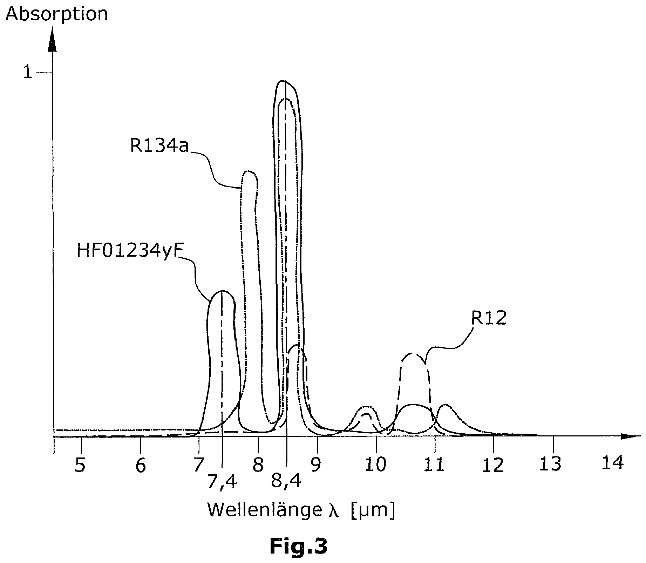

In Fig. 3 sind typische Absorptionsspektren der Kältemittel HFO1234yf, R134a und r12 dargestellt.

a) Bezugsgröße für Summe Kältemittel

Der Wellenlängenbereich von 8...14 μm ist repräsentativ für alle üblichen Kältemittel, schließt aber Kohlenwasserstoffe, wie Methan, Propan, Butan,..., $CO_2$ und Wasserdampf aus. Dieser Wellenlängenbereich ist damit ideal geeignet, die Summe aller Kältemittel zu repräsentieren und damit eine 100% Bezugsgröße für die benötigte Messung der Reinheit von HFO-1234yf zu bilden (dieser Bereich wird auch kommerziell für Universalkältemitteldetektoren, wie die INFICON Geräte D-TEKselect oder HLD5000smart genutzt).

Das Absorptionssignal in diesem gesamten Bereich ist somit ein Maß für die Summe der Partialdrücke aller Kältemittel.

b) Messgröße für Anteil HFO1234yf

Im Idealfall würde eine freie Absorptionslinie von HFO-1234yf ausreichen, um ein Signal für den Partialdruck von HFO1234yf allein zu messen. Die HFO-1234yf-Linie bei 7,2 $\mu$m wäre solch eine Linie, wenn hier nicht schon die Wasserdampfabsorption sich störend bemerkbar machen würde.

Deshalb müssen zwei Linien herausgezogen werden, um den HFO1234yf Partialdruck zu bestimmen:

- die Linie bei 8,34 $\mu$m repräsentiert die Summe von R134a und HFO1234yf und
- die Linie bei 7,69 $\mu$m repräsentiert R134a allein

Durch Subtraktion des durch die 7,69 $\mu$m-Linie bekannten Anteils von R134a von der Linie bei 8,43 $\mu$m kann damit der HFO-1234yf Partialdruck bestimmt werden.

c) Ermittlung der Reinheit von HFO-1234yf und der Verunreinigung durch R134a

Durch Verhältnisbildung des HFO-1234yf-Partialdrucks aus b) zum Summenpartialdruck aller Kältemittel aus a) ergibt sich eine Prozentzahl für die Reinheit von HFO-1234yf. Da außerdem der Partialdruck von R134a aus der Absorption auf 7,69 $\mu$m ermittelt wurde, kann auch angegeben werden, ob die Verunreinigung aus R134a allein oder aus noch weiteren (unbekannten) Kältemitteln besteht.

## Patentansprüche

1. Verfahren zum Ermitteln der Reinheit eines zu testenden Testkältemittels unter Verwendung einer Vorrichtung (10) mit einer Gaszelle (12), die einen Testgaseinlass und einen Testgasauslass aufweist, einer die Gaszelle (12) durchstrahlenden Infrarotquelle (20), einer Kartusche (26), die das zu detektierende Kältemittel in reiner Form als Referenzgas enthält, und mindestens einem die durch die Gaszelle hindurchtretende Infrarotstrahlung erfassenden Sensor (22), wobei

   zwischen der Infrarotquelle (20) und dem Sensor (22) mindestens ein Breitbandfilter (28, 30) vorgesehen ist, dessen Durchlassbereich Wellenlängen von mehr als 8 $\mu$m und von weniger als 14 $\mu$m aufweist, und die Gaszelle (12) derart mit der Kartusche (26) verbunden ist, dass die Gaszelle mit dem Referenzgas der Kartusche befüllbar ist,

   mit den Schritten:

   Messen der Infrarotabsorption in dem Durchlassbereich des Breitbandfilters (28, 30) bei mit Referenzkältemittel gefüllter Gaszelle (12),
   Messen der Infrarotabsorption in dem Durchlassbereich des Breitbandfilters (28, 30) bei mit Testkältemittel gefüllter Gaszelle (12), und
   Bilden des Quotienten aus den Messwerten der Messungen mit dem Referenzkältemittel und mit dem Testkältemittel.

2. Verfahren (10) nach Anspruch 1, **dadurch gekennzeichnet, dass** zwischen der Infrarotquelle (20) und dem Sensor (22) mindestens ein erstes Schmalbandfilter (28, 30) vorgesehen ist, dessen Durchlassbereich schmaler ist als derjenige des Breitbandfilters.

3. Verfahren (10) nach Anspruch 2, **dadurch gekennzeichnet, dass** ein erstes Schmalbandfilter (28, 30) mit der Wellenlänge des reinen, zu detektierenden Gases und ein weiteres zweites Schmalbandfilter (28, 30) mit einer Wellenlänge eines anderen Kältemittels vorgesehen ist, wobei die Durchlassbereiche der Schmalbandfilter jeweils geringer sind als derjenige des Breitbandfilters.

4. Verfahren (10) nach Anspruch 3, **dadurch gekennzeichnet, dass** der Durchlassbereich des ersten Schmalbandfilters (28, 30) mindestens die Wellenlänge 7,4 $\mu$m und maximal den Wellenlängenbereich von 7,2 $\mu$m bis 7,6 $\mu$m aufweist, dass der Durchlassbereich des zweiten Schmalbandfilters (28, 30) mindestens die Wellenlänge 7,69 $\mu$m und maximal den Wellenlängenbereich zwischen 7,5 und 7,9 $\mu$m aufweist.

5. Verfahren (10) nach einem der Ansprüche 2 bis 4, **dadurch gekennzeichnet, dass** ein drittes Schmalbandfilter (28, 30) für Kohlenwasserstoffe vorgesehen ist, dessen Durchlassbereich die Wellenlänge 3,45 $\mu$m und maximal den Wellenlängenbereich zwischen 3,25 und 3,65 $\mu$m aufweist.

6. Verfahren (10) nach einem der Ansprüche 2 bis 5, **dadurch gekennzeichnet, dass** mindestens ein Schmalbandfilter (28, 30) vorgesehen ist, dessen Durchlassbereich in dem Durchlassbereich des Breitbandfilters (28, 30) enthalten ist.

**Claims**

1. A method for determining the purity of a test refrigerant to be tested using a device (10) with a gas cell (12), which has a test gas inlet and a test gas outlet, an infrared source (20) that radiates through the gas cell (12), a cartridge (26) that contains the refrigerant to be detected in pure form as a reference gas, and at least one sensor (22) that detects the infrared radiation that passes through the gas cell, wherein

   at least one wide-band filter (28, 30) is provided between the infrared source (20) and the sensor (22), the passband of said filter comprising wavelengths of more than 8 $\mu$m and of less than 14 $\mu$m, and
   the gas cell (12) is connected to the cartridge (26) such that the gas cell is fillable with the reference gas of the cartridge,

   with the following steps:

   measuring the infrared absorption in the passband of the wide-band filter (28, 30), with the gas cell (12) filled with a reference refrigerant,
   measuring the infrared absorption in the passband of the wide-band filter (28, 30), with the gas cell (12) filled with the test refrigerant, and
   forming the quotient of the measured values of the measurements with the reference refrigerant and with the test refrigerant.

2. The method (10) according to claim 1, **characterized in that** at least one first narrow-band filter (28, 30) is provided between the infrared source (20) and the sensor (22), the passband of said filter being narrower than the one of the wide-band filter.

3. The method (10) according to claim 2, **characterized in that** a first narrow-band filter (28, 30) with the wavelength of the pure gas to be detected and a further, second narrow-band filter (28, 30) with a wavelength of another refrigerant are provided, wherein the passbands of the narrow-band filters are each smaller than the one of the wide-band filter.

4. The method (10) according to claim 3, **characterized in that** the passband of the first narrow-band filter (28, 30) comprises at least the wavelength of 7.4 $\mu$m and, at most, the wavelength range from 7.2 $\mu$m to 7.6 $\mu$m, **in that** the passband of the second narrow-band filter (28, 30) comprises at least the wavelength of 7.69 $\mu$m and, at most, the wavelength range from 7.5 $\mu$m to 7.9 $\mu$m.

5. The method (10) according to one of claims 2 to 4, **characterized in that** a third narrow-band filter (28, 30) for hydrocarbons is provided, whose passband comprises the wavelength of 3.45 $\mu$m and, at most, the wavelength range from 3.25 $\mu$m to 3.65 $\mu$m.

6. The method (10) according to one of claims 2 to 5, **characterized in that** at least one narrow-band filter (28, 30) is provided, whose passband is included in the passband of the wide-band filter (28, 30).

**Revendications**

1. Procédé destiné à déterminer la pureté d'un agent réfrigérant à tester en utilisant un dispositif (10) doté d'une cellule de gaz (12) comportant une entrée de gaz de test et une sortie de gaz de test, d'une source infrarouge (20) irradiant la cellule de gaz (12), d'une cartouche (26) contenant l'agent réfrigérant à détecter sous forme pure en tant que gaz de référence, et d'au moins un capteur (22) saisissant le rayonnement infrarouge passant à travers la cellule de gaz, dans lequel
   au moins un filtre à large bande (28, 30) est prévu entre la source infrarouge (20) et le capteur (22), dont la bande passante comporte des longueurs d'onde supérieures à 8 $\mu$m et inférieures à 14 $\mu$m, et
   la cellule de gaz (12) est reliée à la cartouche (26) de telle sorte que la cellule de gaz peut être remplie par le gaz de référence de la cartouche,
   avec les étapes de :

   mesure de l'absorption infrarouge dans la bande passante du filtre à large bande (28, 30) lorsque la cellule de gaz (12) est remplie d'agent réfrigérant de référence,
   mesure de l'absorption infrarouge dans la bande passante du filtre à large bande (28, 30) lorsque la cellule de gaz (12) est remplie d'agent réfrigérant de test, et
   formation du quotient à partir des valeurs des mesures avec l'agent réfrigérant de référence et l'agent réfrigérant de test.

2. Procédé (10) selon la revendication 1, **caractérisé en ce qu'**au moins un premier filtre à bande étroite (28, 30) est prévu entre la source infrarouge (20) et le capteur (22), dont la bande passante est plus réduite que celle du filtre à large bande.

3. Procédé (10) selon la revendication 2, **caractérisé en ce qu'**un premier filtre à bande étroite (28, 30) est prévu avec la longueur d'onde du gaz pur à détecter et un deuxième filtre à bande étroite (28, 30) supplémentaire est prévu avec une longueur d'onde d'un autre agent réfrigérant, dans lequel les bandes passantes des filtres à bande étroite sont respectivement plus réduites que celle du filtre à large bande.

4. Procédé (10) selon la revendication 3, **caractérisé en ce que** la bande passante du premier filtre à bande étroite (28, 30) comporte au moins la longueur d'onde 7,4 $\mu$m et au maximum l'intervalle de longueurs d'onde de 7,2 $\mu$m à 7,6 $\mu$m, **en ce que** la bande passante du deuxième filtre à bande étroite (28, 30) comporte au moins la longueur d'onde 7,69 $\mu$m et au maximum l'intervalle de longueurs d'onde entre 7,5 $\mu$m et 7,9 $\mu$m.

5. Procédé (10) selon l'une des revendications 2 à 4, **caractérisé en ce qu'**un troisième filtre à bande étroite (28, 30) est prévu pour les hydrocarbures, dont la bande passante comporte la longueur d'onde 3,45 $\mu$m et au maximum l'intervalle de longueurs d'onde entre 3,25 $\mu$m et 3,65 $\mu$m.

6. Procédé (10) selon l'une des revendications 2 à 5, **caractérisé en ce qu'**au moins un filtre à bande étroite (28, 30) est prévu, dont la bande passante est contenue dans la bande passante du filtre à large bande (28, 30) .

Lufteinlass

V1

26

24

V2

V4

30

18

14

22

16

V3

12

18

28

20

32

10

Gasauslass

**Fig.1**

k=1
3,45µm

k=2
7,4µm

k=3
7,69µm

k=4
8....14µm

Absorption

1

0

3  4  5  6  7  8  9  10  11  12  13  14

**Fig.2**

Wellenlänge λ [µm]

Fig.3

```
┌─────────────────────┐              (START)
│   V1 öffnen,         │                 │
│   V3 umschalten,     │─────────┐       ▼
│   Pumpe einschalten  │         │  ┌──────────────┐
└─────────────────────┘         └─▶│  Gaszelle mit │
                                    │  Luft spülen  │
┌─────────────────────┐            └──────────────┘
│   V1 schliessen,    │                   │
│   V3 umschalten,    │──────┐            ▼
│   Pumpe ausschalten │      └──▶┌────────────────┐
└─────────────────────┘         │  Gaszelle mit  │
                                │  Referenzgas   │
┌─────────────────────┐    ┌───▶│  füllen        │
│   V2 öffnen,        │    │    └────────────────┘
│   (0,2 sek.lang)    │────┘            │
└─────────────────────┘                ▼
                                ┌────────────────┐
                                │  Sensor-       │
                                │  spannungen    │
                                │  messen        │
┌─────────────────────┐         └────────────────┘
│   V1 öffnen,        │                 │
│   V3 umschalten,    │────────────▶    ▼
│   Pumpe einschalten │         ┌────────────────┐
└─────────────────────┘         │  Gaszelle mit  │
                                │  Luft spülen   │
┌─────────────────────┐         └────────────────┘
│   V1 schliessen,    │                 │
│   V3 umschalten,    │────────────▶    ▼
│   Pumpe ausschalten │         ┌────────────────┐
└─────────────────────┘         │  Gaszelle mit  │
                                │  Testgas füllen │
                                │  (via V4)      │
                                └────────────────┘
                                        │
                                        ▼
                                ┌────────────────┐
                                │  Sensor-       │
                                │  spannungen    │
                                │  messen        │
                                └────────────────┘
                                        │
                                        ▼
                                ┌────────────────┐
                                │  Resultat      │
                                │  berechnen und │
                                │  darstellen    │
                                └────────────────┘
                                        │
                                        ▼
                                     (ENDE)
```

**Fig.4**

11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1398618 A2